Europäisches Patentamt

European Patent Office

Office européen des brevets

(11) Publication number: **0 033 228**
**B1**

(12) **EUROPEAN PATENT SPECIFICATION**

(45) Date of publication of patent specification: **17.09.86**

(21) Application number: **81300292.0**

(22) Date of filing: **22.01.81**

(51) Int. Cl.⁴: **H 04 L 1/16, G 06 F 15/00, H 04 L 11/16, G 08 C 25/00**

(54) Industrial control system.

(30) Priority: **24.01.80 US 115160**
**24.01.80 US 115161**
**16.06.80 US 159597**
**31.10.80 US 202472**
**31.10.80 US 202471**

(43) Date of publication of application:
**05.08.81 Bulletin 81/31**

(45) Publication of the grant of the patent:
**17.09.86 Bulletin 86/38**

(84) Designated Contracting States:
**CH DE FR GB IT LI NL**

(56) References cited:
**DE-A-1 958 727**
**DE-A-2 808 937**
**DE-A-3 012 438**
**DE-B-1 265 192**
**DE-B-1 290 960**
**DE-B-1 293 817**
**GB-A- 952 290**
**GB-A-1 550 635**
**US-A-2 944 110**
**US-A-3 624 603**
**US-A-4 001 785**

(73) Proprietor: **FORNEY INTERNATIONAL, INC.**
**3405 Wiley Post Road**
**Carrollton Texas (US)**

(72) Inventor: **Slater, Billy R.**
**2805 Landershire**
**Plano Texas 75023 (US)**
Inventor: **Cope, Michael E.**
**619 Newberry Drive**
**Richardson Texas (US)**
Inventor: **Paredes, Candelario**
**6608 Briarhaven Drive**
**Dallas Texas (US)**

(74) Representative: **Bowman, Paul Alan et al**
**LLOYD WISE, TREGEAR & CO. Norman House**
**105-109 Strand**
**London WC2R OAE (GB)**

Courier Press, Leamington Spa, England.

(56) References cited:

ELECTRICAL DESIGN NEWS, vol. 17, no. 7, April 1972, Boston, US, OHLHABER: "Multiplexing doesn't have to be limited to communications applications", pages 18-23

PROCEEDINGS OF THE NATIONAL ELECTRONICS CONFERENCE, vol. 31, 1977, OAK BROOK, US, LEWIS: "Use of a rotating-master loop network as a high integrity intersystem data link", page 30

## Description

The present invention relates to a method of operating a control system as in the first part of Claim 1 and to a control system as in the first part of Claim 4.

Such methods and such systems are known in which a set of remotely located process control units, which are referred to in the description hereinafter as "remotes", are each capable of assuming control of the communications link to which they are all connected so as to enable the units to communicate freely between one another.

It is a common feature of both the present invention and known systems that the remotes are organised into a hierarchical system whereby each in turn has the opportunity to become the master for the moment and each has a respective timer and that when control is to be transferred to the next master for the moment a related timing period is commenced in which the transfer is to be completed. Should the timing means time out, which will happen should the master-to-be have failed to have accepted control by the end of the timing period, control is then automatically denied to that remote and offered to another. In known systems in the event of the timer timing out due to a malfunction in the remote trying to become the master for the moment, the control of the system is assumed by the highest priority remote and the sequence of operation in the system restarts. Thus, if the system fails again at the same point as it did before, the lower priority remotes will never obtain a chance to assume control of the communications link and therefore will never have the opportunity to communicate. It is also noted that in known systems the timing means of the respective remotes are in fact fixed length timers and the duration of the timing period of each is chosen so that it reflects the order of the respective remote in the hierarchy with the highest priority remote having the shortest time-out interval. In other known systems a second timer in each remote sets a time interval TB at the time the remote transmits its transfer command signal SEL. If the next station does not accept the transfer the present station adds one to the address and re-transmits the transfer command signal SEL to the second successive remote. This alternative system, however, still suffers the disadvantage that it depends upon the proper functioning of the present master. Should the present master fail, then once again the highest priority station will automatically become the new master.

The present invention differs from these arrangements in that in the event of a timing-out occurring, control is offered to a succeeding remote and to facilitate such operation each remote is equipped with a variable period timer. When control is to be transferred from a previous master to another remote, the remotes which are to succeed the new master-to-be all have their timers set to provide a respective selected number of timing increments, these timing increments each being of common fixed length but the number being dependent upon the order of the remotes in the hierarchal system relative to the present master. Thus, for example, the remote succeeding the next master-to-be, has its timer set to, say, 50 microseconds, the remote succeeding the next succeeding remote has its timer set at this same instant to 100 microseconds, the third succeeding remote at this same instant has its timer set to 150 microseconds, and so on, irrespective of the actual location of these remotes in the hierarchal system. Thus in the normal way there is always one (or more) remote whose timer has not timed out in the event of the failure of the master-to-be not accepting control and by this means the control is transferred in sequence through the succeeding remote stations notwithstanding malfunction of one of the remotes. The system is, moreover, arranged so that the selection of the masters rotates in a cyclic sequence through all the remote stations even in the event of a malfunction. Known systems do not have this capability.

Brief description of the drawings

The above description, as well as the objects, features, and advantages of the present invention will be more fully appreciated by reference to the following detailed description of a presently preferred but nonetheless illustrative embodiment in accordance with the present invention when taken in connection with the accompanying drawings wherein:

Fig. 1 is a schematic diagram of an exemplary process control system including a plurality of remote process control units (remotes), including both primary control remotes and redundant remotes, connected to a common dual-channel communications link;

Fig. 2 is a schematic block diagram of an exemplary remote process control unit of the type shown in Fig. 1;

Fig. 3 is a schematic block diagram of an exemplary modulator/demodulator (MODEM) for the remote process control unit shown in Fig. 2;

Fig. 4 is a schematic block diagram of an exemplary communication protocol controller for the remote process unit shown in Fig. 2;

Fig. 4A is a schematic block diagram of an exemplary input/output management device for the remote process control unit shown in Fig. 2;

Fig. 4B is a flow diagram illustrating the manner in which the change-in-status events of the controlled devices of Fig. 1 are detected by the input/output management device of Fig. 4A;

Fig. 5 illustrates the format of an exemplary or illustrative information block for transferring information between remotes;

Fig. 5A illustrates the format of a header frame of the information block shown in Fig. 5;

Fig. 5B illustrates the format for a data/information frame of the information block shown in Fig. 5;

Fig. 5C illustrates the format for an acknowledgement block (ACK) for acknowledging successful receipt of an information block;

Fig. 5D illustrates the format for a non-acknowledgement block (NAK) for indicating the unsuccessful transmission of an information block between remotes;

Fig. 6 illustrates, in pictorial form, two identical data blocks having the format shown in Fig. 5 successively transmitted on each communication channel of the communication link illustrated in Fig. 1;

Fig. 7 is a flow diagram summary of the manner in which a source and a destination remote effect communications with one another;

Fig. 8A is a partial flow diagram illustrating in detail the manner in which a source and a destination remote communicate and validate information transferred between one another;

Fig. 8B is a partial flow diagram which completes the flow diagram of Fig. 8A and illustrates in detail the manner in which a source and a destination remote communicate and validate information transferred between one another;

Fig. 9 is a legend illustrating the manner in the flow diagrams of Fig. 8A and Fig. 8B are to be read;

Figs. 10A through 10F are exemplary tables illustrating the manner in which supervisory control of the communication link is transferred from remote to remote;

Fig. 11 is a schematic block diagram of an exemplary redundant remote that is adapted to assume control from a failed or otherwise inoperative primary remote;

Figs. 11A and 11B are flow diagrams of the manner in which the central processing unit of the redundant remote R4 monitors the operating condition of its assigned primary remotes R1, R2, and R3 and takes over operation when one of the primary remotes fails;

Fig. 12 is a flow diagram summary of the manner by which an interrogating remote $R_x$ tests the integrity of the communication link between it and the remotes $R_{x-1}$ and $R_{x-1}$ immediately adjacent thereto in the succession order;

Fig. 12A is a partial flow diagram illustrating in detail the manner by which an interrogating remote $R_x$ tests the communications integrity of the communications link between it and the next lower number remote $R_{x-1}$ in the succession order;

Fig. 12B is a partial flow diagram illustrating in detail the manner in which an interrogating remote $R_x$ tests the communications integrity of the communications link between it and the next higher number remote $R_{x+1}$ in the succession order;

Fig. 12C is a partial flow diagram illustrating in detail the manner by which a line termination impedance is applied to the communications link in the event of a communications link degradation or interruption;

Fig. 13 is a legend illustrating the manner in which the flow diagrams of Figs. 12A, 12B, and 12C are to be read; and

Fig. 14 is an exemplary table illustrating the status of various counters when an interrogating remote $R_x$ is evaluating the integrity of the communications link in accordance with the flow diagram shown in Fig. 12A.

Description of the preferred embodiment

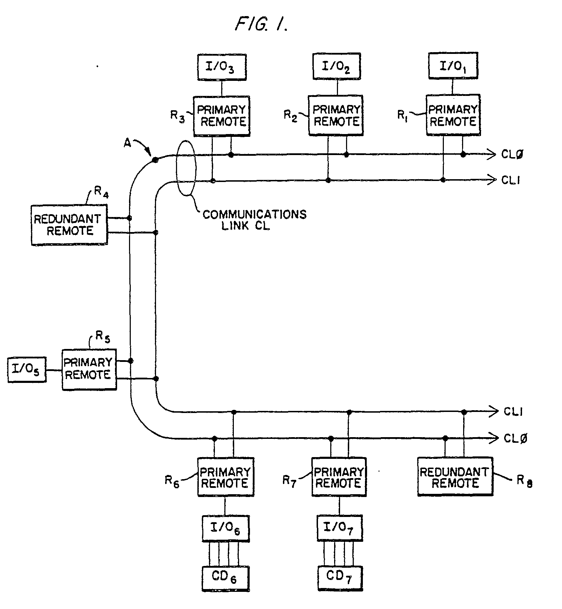

An industrial control system is shown in schematic form in Fig. 1 and includes a communications link CL (C-link) having a plurality of remotely located process control units (remotes) $R_1, R_2, \ldots R_7, R_8$ connected thereto with the eight remotes ($R_1$—$R_8$) shown being exemplary; it being understood that the system is designed to be used with a much larger number of remotes. Of the eight remotes illustrated, the remotes $R_1$—$R_3$ and $R_5$—$R_7$ are 'primary' remotes and the remotes $R_4$ and $R_8$ are 'redundant' remotes. The communications link CL is shown as an open line, double channel configuration formed from dual coat, dual twisted pair, or the like with the individual communication links identified, respectively, by the reference characters CLØ and CL1. While the system configuration shown in Fig. 1 is a distributed open loop or shared global bus type, the invention is equally suitable for application to central systems or central/distributed hybrid configurations. The system of Fig. 1 is adapted for use in controlling an industrial process, e.g., the operation of a power generating plant, with each primary remote unit $R_1$—$R_3$ and $R_5$—$R_7$ connected to one or more associated or corresponding input/output devices $I/O_1$—$I/O_3$ and $I/O_5$—$I/O_7$, respectively. Each input/output device is, in turn, connected to an associated controlled device $CD_1$—$CD_3$ and $CD_5$—$CD_7$ (of which only $CD_6$ and $CD_7$ are illustrated in Fig. 1) such as, but not limited to, various types of sensors (temperature, pressure, position, and motion sensors, etc.) and various types of actuators (motors, pumps, compressors, valves, solenoids, and relays, etc.). Each primary remote may control a large number of output devices and respond to a large number of input devices, and the blocks labeled I/O in Fig. 1 can each represent many input and output devices.

The redundant remote $R_4$ monitors the operation of primary remotes $R_1$, $R_2$, and $R_3$; and the redundant remote $R_8$ monitors the operation of primary remotes $R_5$, $R_6$, and $R_7$. Should any one of the remotes $R_1$, $R_2$, and $R_3$ fail, the failure will be detected by the remote $R_4$ in a manner to be described and the remote $R_4$ will take over control of the input and output devices of the failed remote by receiving the data from the failed remote over the communications link CL and sending commands to the failed remote over the communications link CL in formated information blocks. Similarly, if one of the remotes $R_5$, $R_6$ or $R_7$ fails, the redundant remote $R_8$ will take over control of the operation of the input/output devices for the failed remote as described above with respect to redundant remote $R_4$.

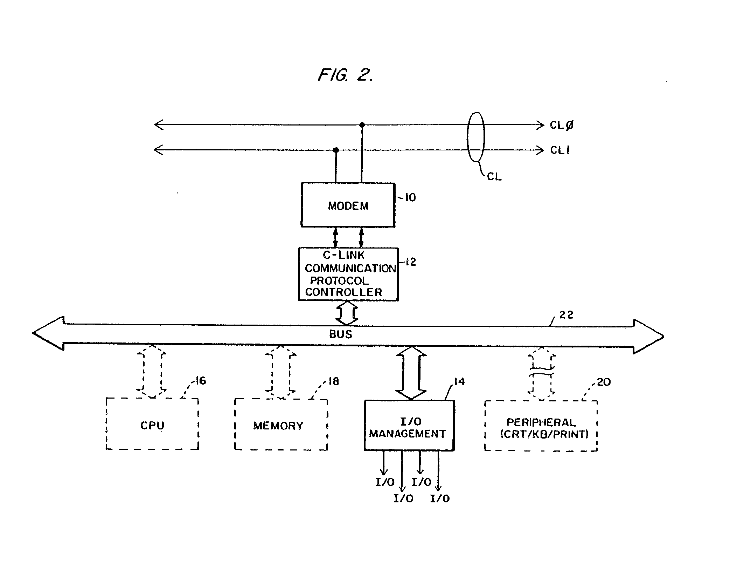

The architecture of an exemplary remote $R_n$ is shown in Fig. 2. While the architecture of the remote $R_n$ can vary depending upon the control process requirements, the remote shown in Fig. 2 includes a modem 10; a communication protocol controller 12; an input/output management device 14; a central processing unit (CPU) 16; a memory 18; a peripheral device 20 that can include, e.g., a CRT display, a printer, or a keyboard; and a common bus 22 which provides addressing, control, and information transfer between the various devices which constitute the remote. The devices shown in dotted line illustration in Fig. 2 (that is, the central processing unit 16, the memory 18, and the peripheral device 20) are provided depending upon the process control requirements for the remote $R_n$. For example, in those primary remotes $R_n$ which function as an elemental wire replacer, only the modem 10, the communication protocol controller 12, and the input/output management device 14 are provided. In more complex process control requirements, an appropriately programmed central processing unit 16 and associated memory 18 are provided to effect active control according to a resident firmware program. In still other remotes requiring a human interface, the appropriate peripheral device(s) 20 may be connected to the common buss 22.

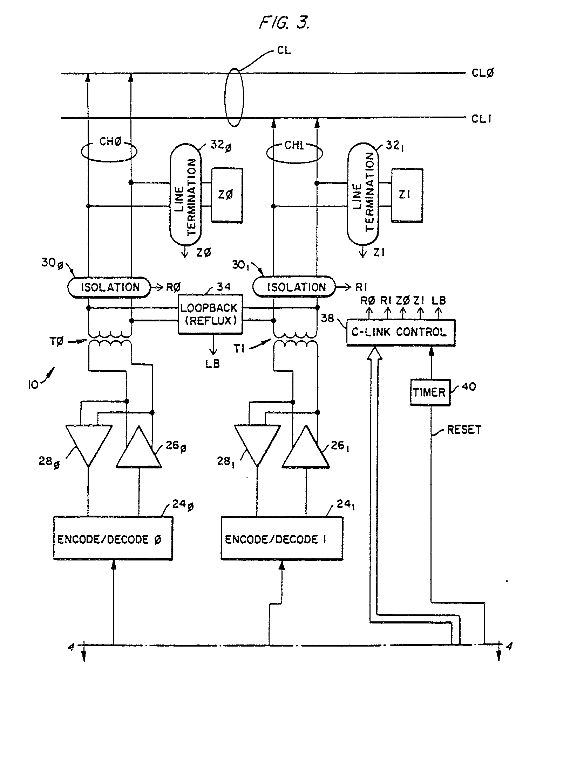

As shown in more detail in Fig. 3, the modem 10 provides two independent communication channels CHØ and CH1 connected, respectively, to the communication links CLØ and CL1. Each of the communication channels CHØ and CH1 is provided with substantially identical communication devices, and a description of the communication devices of the first communication channel CHØ is sufficient to provide an understanding of the second communication channel CH1. The communication channel CHØ includes an encoder/decoder $24_0$ for providing appropriate modulation and demodulation of the digital data transmitted to and received from the communication link CLØ. In the preferred form, the encoder/decoder $24_0$ converts digital information in non-return-to-zero binary (NRZ) format to base-band modulation (BBM) signal format for transmission and effects the converse for reception. Amplifiers $26_0$ and $28_0$ are provided, respectively, to drive a passive coupling transformer TØ with digital information provided from the encoder/decoder $24_0$ from the coupling transformer TØ. A set of selectively operable relay contacts $30_0$ are provided between the coupling transformer TØ and the corresponding communication link CLØ to effect selective interruption thereof to isolate the remote $R_n$ from the communications link CL, and another set of relay contacts $32_0$ are provided to selectively connect the signal output of the coupling transformer TØ with a termination impedance ZØ. The termination impedance ZØ is used when the particular remote $R_n$ is at the end of the communication link CL to provide proper line termination impedance for the link, or, as described in more detail below, to assist in terminating an open or degraded portion of the communications link CL.

A selectively operable loop-back circuit 34 is provided to permit looping back or recirculation of test data during diagnostic checking of the remote $R_n$. While not specifically shown in Fig. 3, the loop-back circuit 34 can take the form of a double pole, single throw relay that effects connection between the channels CHØ and CH1 in response to a loop-back command signal 'LB'. During the diagnostic checking of a remote, which checking takes place when a particular remote is a master-for-the-moment as explained below, the relay contacts of the loop-back circuit 34 are closed and a predetermined test word is sent from the channel CHØ to the channel CH1 and from the channel CH1 to the channel CHØ with the received word in each case being checked against the original test word to verify the transmit/receive integrity of the particular remote.

The isolation relays $30_0$ and $31_1$, the impedance termination relays $32_0$ and $32_1$, and the loop-back circuit 34 are connected to and selectively controlled by a communications link control device 38 which receives its communication and control signals from the communications protocol controller 12 described more fully below. A watch-dog timer 40 is provided to cause the C-link control device 38 to operate the isolation relays $30_0$ and $30_1$ to disconnect the remote $R_n$ from the communication link CL in the event the time 40 times-out. The timer 40 is normally prevented from timing out by periodic reset signals provided from the communication protocol controller 12. In this way, a remote $R_n$ is automatically disconnected from the communication link CL in the event of a failure of its communication protocol controller 12.

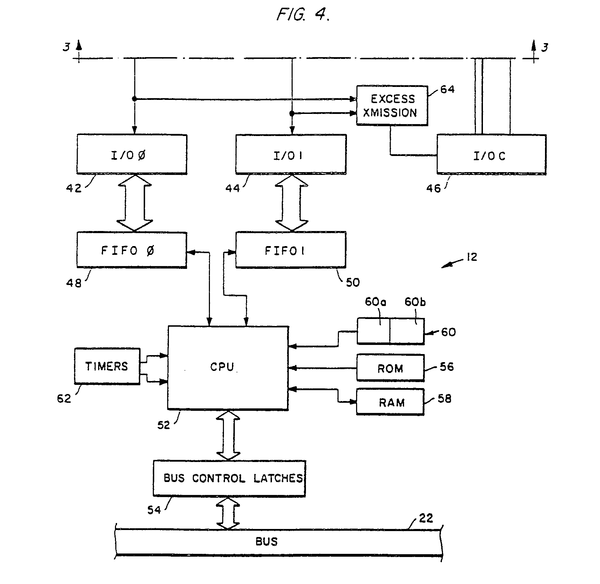

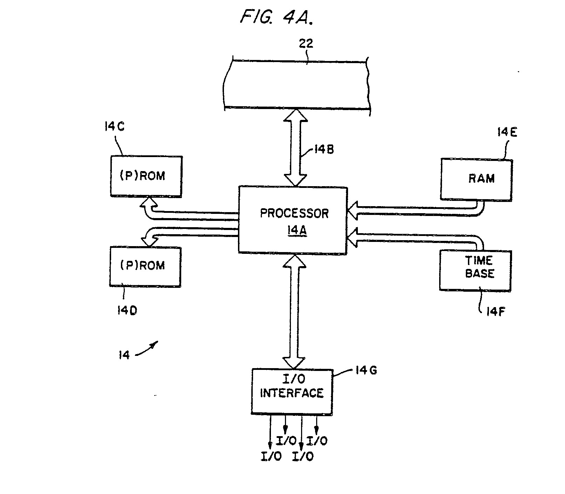

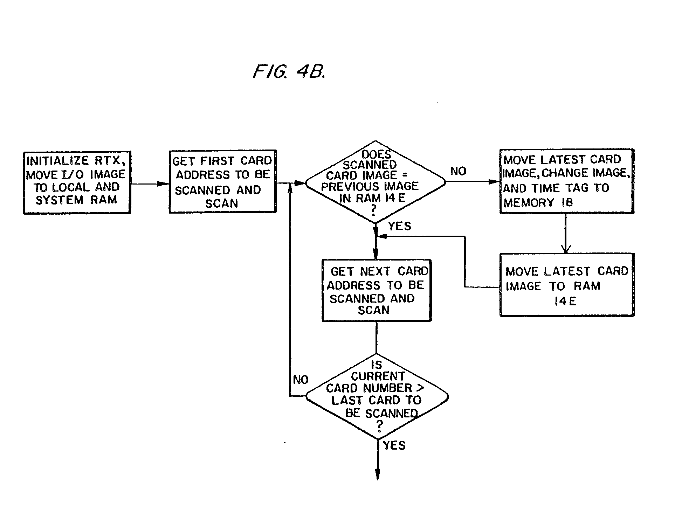

As shown in more detail in Fig. 4, each communication protocol controller 12 includes input/output ports 42, 44, and 46 which interface with the above described modem 10 for the communication channels CHØ and CH1 and the modem C-link control device 38 (Fig. 3). A first-in first-out (FIFO) serializer 48 and another first-in first-out serializer 50 are connected between the input/output ports 42 and 44 and a CPU signal processor 52. The first-in first-out serializers 48 and 50 function as temporary stores for storing information blocks provided to and from the modems 10 as described more fully below. The CPU 52, in turn, interfaces with the buss 22 through buss control latches 54. A read only memory (ROM) 56 containing a resident firmware program for the CPU 52 and a random access memory (RAM) 58 are provided to permit the CPU 52 to effect its communication protocol function as described more fully below. Timers 62 and a register 60 (for example, a manually operable DIP switch register or a hardwired jumper-type register) that includes registers 60a and 60b are also provided to assist the CPU 52 in performing its communication protocol operation. An excess transmission detector 64, connected to input/output ports 42 and 44 (corresponding to communication channels CH0 and CH1) determines when the transmission period is in excess of a predetermined limit to cause the C-link control device 38 (Fig. 3) to disconnect the transmitting remote from the communications link CL and thereby prevent a remote that is trapped in a transmission mode from monopolizing the communications link CL.

The input/output management device 14, the architecture of which is shown in Fig. 4A, is preferably a firmware controlled microprocessor-based device which is adapted to scan the various input/output hardware points of the controlled device, effect a point-by-point status comparison with a prior scan, and record the change-in-status events along with the direction of the change and the time the event occurred (time-tagging), effect data collection and distribution to and from the input/output points, format the collected data in preferred patterns, and assemble the patterned data in selected sequences.

As shown in Fig. 4A, the input/output management device 14 includes a processor 14A connected to the remote buss 22 through a processor buss 14B; read-only-memories 14C and 14D connected to the processor 14A through appropriate connections with these memories including the firmware necessary to effect the above-described functions of the input/output management device 14 including the change-in-status event monitoring (described in more detail below); a read/write memory 14E (RAM) for temporarily storing information incident to the operation of the processor 14A including the change-in-status event information; a time base 14F for providing time information for time tagging the change-in-status events; and an input/output interface 14G for connection, either directly or indirectly, to the controlled devices.

In the preferred embodiment, the input/output interface 14G is defined by one or more printed circuit control cards generally arranged in rack formation with each card having hardware points arranged in predetermined sets of eight points with each hardware point carrying a binary indication for controlling or sensing the operation of the controlled device. The control and operational status of the controlled device can generally be represented by one or more eight-bit words (e.g., 00010001) with each bit position representing a control or operational characteristic of the controlled device.

As described in further detail below in connection with Fig. 4B, the input/output management device 14 effects the aforedescribed change-in-status monitoring and associated time-tagging by periodically scanning the input/output hardware points in eight-bit groups and effecting a comparison between the so-obtained eight-bit group and the eight-bit group obtained during the previous scan. If a change is detected in one or more of the bit positions, the latest eight-bit group, along with the time-of-day information obtained from the time base 14F, and other information, if desired, representing the direction of change, is placed in a first-in first-discard memory (FIFO) of predetermined size. Thus, each change-of-status event along with its time tag and other information such as direction of change, etc. is placed in a memory of selected size as the changes occur. When all the memory locations are filled, the first entered event (which now represents the oldest chronological event) is discarded as the latest event enters the memory. The memory loading is inhibited by the occurrence of any one of a selected number of inhibit signals. In the system, various conditions including alarm conditions which represent partial or full system failures can be assigned a priority with those conditions or combinations thereof designated as "high" priority signals being permitted to disable or inhibit further accessing of the memory. In the event one of these high priority conditions occurs, the memory is inhibited from storing additional change-in-status information and the change-in-status events occurring prior to the high priority condition are preserved for subsequent analysis. Alarm conditions which are not designated as high priority, of course, do not inhibit the memory. This technique advantageously differs from those prior techniques in which the controlled device status was only placed in memory at the moment of a high priority signal (in which case a historical pre-failure record-of-events was not available) or those techniques in which the change-in-status events were logged in a memory which was periodically cleared, refilled, and cleared in which case the probability of obtaining a complete history of events prior to a predetermined high priority condition diminished in those instances in which the logging memory was cleared just prior to the occurrence of the high priority condition.

The manner by which the input/output management device 14 effects the change-of-status event logging is shown in Fig. 4B. During initialization, the processor 14B (referred to also as the RTZ in Fig. 4B) moves an image of the various input/output points, that is, the current status of the various input/output hardware points, to preassigned locations in the memory 14E (local) of the input/output management device 14 and the memory 18 (system) of the remote $R_n$ (Fig. 2). Thereafter, the address(s) of the first input/output card is obtained and the input/output hardware points for that card are scanned to obtain an input/output image which takes the form of an eight-bit word (e.g., 00000000) with each bit position representing the control or operational status of the controlled device. The input/output points so obtained are then compared with the previously obtained image of the points (e.g., 00100000), for example, by effecting a bit-by-bit exclusive OR (XOR) comparison. If the comparison indicates no change in status, (that is, the words are identical) the input/output points in the remaining cards are likewise scanned with the process repeated on a cyclic or looped basis. However, if a change is detected in the exclusive OR comparison, that new input/output scan, along with the time tag information and the direction of change is placed in the memory 18 of the remote $R_n$, and, in addition, the latest scan is moved to the memory 14E of the input/output management device. This process continues with each new change-in-status event loaded into the memory 18 of the remote on a first-in first-discarded basis. The first-in first discard memory may be configured by assigning a preselected number of memory locations in the memory 18 of the remote $R_n$ (e.g., fifty locations) for the logging information and providing an address pointer that points to each successive location in a serial manner with the pointer returning to the first location after pointing at the last available pre-assigned location in the memory.

In the preferred embodiment, the processor 14A of the input/output management device 14 (Fig. 4A) and the processor 52 (Fig. 4) of the communication protocol controller 12 is 8×300 micro-controller manufactured by the Signetics Company of Sunnyvale, California, and the central processing unit 16 (Fig. 2) is an 86/12 single board 16-bit micro-computer manufactured by the Intel Company of Santa Clara, California and adapted to and configured for the Intel "MULTIBUS".

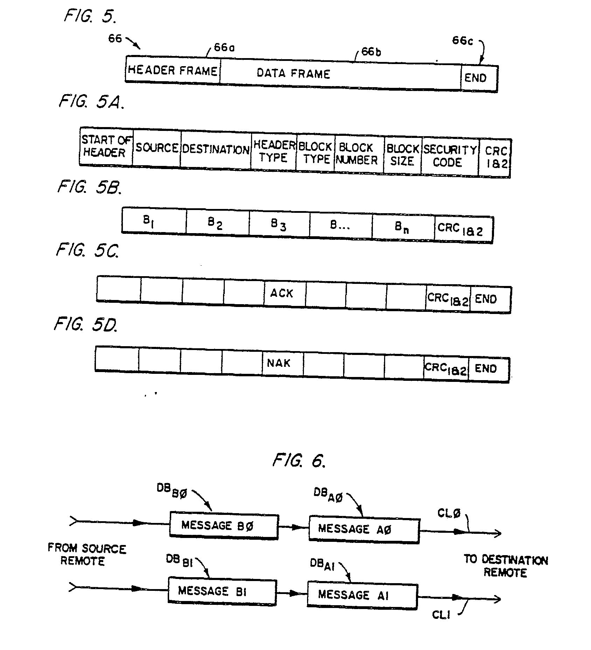

Each remote $R_n$ is adapted to communicate with the other by transmitting digital data organized in predetermined block formats. A suitable and illustrative block format 66 is shown in Fig. 5 and includes a multi-word header frame 66A, a multi-word data frame 66B, and a block termination frame or word 66C. Selected of the information block configurations are adapted to transfer process control information to and from selected remote units $R_n$ and other of the block configurations are adapted to transfer supervisory control of the communications link CL from one remote to the other remote as explained in greater detail below.

An exemplary format for the header and data frames of an information block 66 is shown, respectively, in Figs. 5A and 5B. The header frame 66A preferably includes a 'start of header' word(s) that indicates to all remotes that information is being transmitted; a 'source' identification word(s) that indicates the identity of the source remote $R_s$ that is transferring the information; a 'destination' word(s) that indicates the identity of the receiving or destination remote $R_d$; a 'header-type' word(s) that indicates whether the data block is transferring data, a parametered command block, or a parameterless command block; 'block-type' word indicating the type of block (that is, a command block or a data block); a 'block number' word that indicates the number of blocks being sent; a 'block size' word indicating the length of the data frame; a 'security code' word(s) that permits alteration of the resident software programming in a remote; and, finally, a two-byte 'cyclic redundancy code' (CRC) validity word. The data frame for each data block, as shown in Fig. 5B, can include a plurality of data carrying bytes or words $B_1$, $B_2$, ... $B_n$ of variable length terminated with a two-byte cyclic redundancy code word. As described more fully below, each of the remotes is adapted to acknowledge (ACK) successful receipt of data and command blocks and non-acknowledge (NAK) the receipt of data in which a transmission error is detected. When transmitting an acknowledgement block or a non-acknowledgement block, the header format used is shown in Figs. 5C and 5D in which an acknowledgement (ACK) or non-acknowledgement (NAK) word occupies the 'block type' word position. The block formats disclosed above are intended to be illustrative only and not limiting.

The various remote units $R_1$, $R_2$, $R_3$, ... $R_n$ communicate with one another by having each remote successively take control of the communications link CL and the controlling remote $R_s$ then sending digital information between itself and a destination remote $R_d$ using a double transmission alternate line technique that provides for high reliability data transfer between remotes even when one of the two communication links CL∅ or CL1 is inoperative, for example, when one of the two communication cables is severed or otherwise degraded as occasionally occurs in harsh industrial environments.

When a remote unit assumes control of the communication link CL (as explained more fully below) and, as a source remote $R_s$, desires to send data blocks to another, destination remote $R_d$, the data block is assembled at the source remote $R_s$ in accordance with the block formats discussed above in connection with Figs. 5—5D and transmitted through the information channels CL∅ and CL1 of the source remote $R_s$ to the communication links CL∅ and CL1 with the header frame containing both the source remote $R_s$ and the destination remote $R_d$ identification information.

In accordance with the data transmission technique, the communication protocol controller 12 of the source remote $R_s$ transmits the information blocks twice on each communication link CL∅ and CL1 as schematically illustrated in Fig. 6 to provide a first data block $DB_A$ and then a second, following data block $DB_B$ on each communication link CL∅ and CL1. The transmitted information block headers include the identity of the destination remote, $R_d$, which causes the destination remote $R_d$ to receive and act upon the information blocks. At the destination remote $R_d$, the two data blocks $DB_{A\emptyset}$ and $DB_{B\emptyset}$ on the communication link CL∅ are passed through the communication channel CH∅ and the two data blocks $DB_{A1}$ and $DB_{B1}$ on the communication link CL1 are passed through the communication channel CH1 to, respectively, the first-in first-out serializers 48 and 50 (Fig. 4).

As shown in the summary flow diagram of Fig.

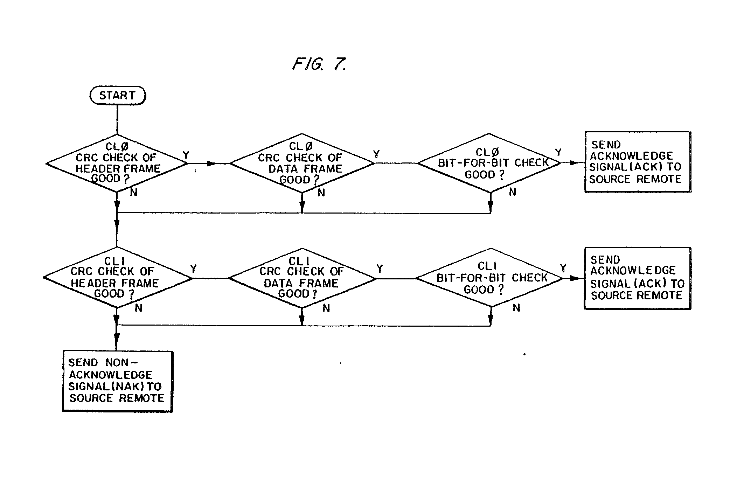

7, the destination remote $R_d$ checks the validity of the received data by selecting one of the two communication links (e.g., CLØ in Fig. 7) and then checks the first data block on the selected line (that is, $DB_{AØ}$) by performing a cyclic redundancy check of the header frame and, if valid, performing a cyclic redundancy check of the data frame. If the data frame is valid, the communication protocol controller 12 of the destination remote $R_d$ then performs a bit-for-bit comparison between the CRC-valid first data block $DB_{AØ}$ and the second following data block $DB_{BØ}$. If the bit-for-bit comparison is good, an acknowledgement (ACK) signal is sent from the destination remote $R_d$ to the source remote $R_s$ to indicate the receipt of valid information and complete that data block information transaction. On the other hand, if the CRC validity checks of the header or the data frame or the bit-for-bit comparison check indicate invalid data, the protocol controller 12 of the destination remote $R_d$ then selects the other, alternate line (in this case, CL1) and performs the aforementioned cyclic redundancy checks of the header and data frame and the bit-for-bit comparison between the first and second data blocks $DB_{A1}$ and $DB_{B1}$ on the alternate line CL1. If these checks indicate valid data on the alternate line, the destination remote $R_d$ responds with an acknowledgement signal (ACK) to conclude the data block transmission transaction. On the other hand, if these checks indicate invalid data on the alternate line (which means that the data blocks on both the first-selected line and the alternate line are invalid) the destination remote $R_d$ responds with a non-acknowledgement signal (NAK) to cause retransmission of the data blocks from the source remote $R_s$. The non-acknowledgement block NAK) includes a byte or bytes indicating the identity of the data block or blocks which should be retransmitted. A counter (not shown) is provided that counts the number of retransmissions from the source remote $R_s$ and, after a finite number of retransmissions (e.g., four), halts further retransmission to assure that a source remote $R_s$ and a destination remote $R_d$ do not become lost in a repetitive transmit/NAK/retransmit/NAK ... sequence in the event of a hardware or software failure of the destination remote $R_d$ error checking mechanism.

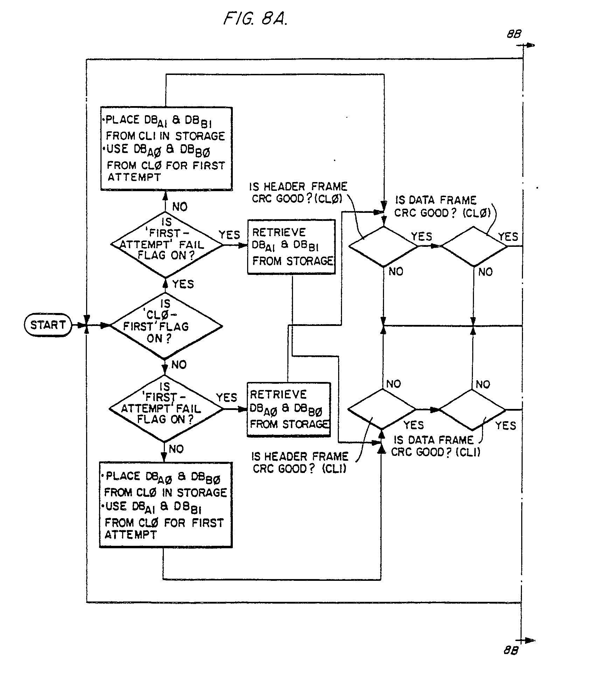

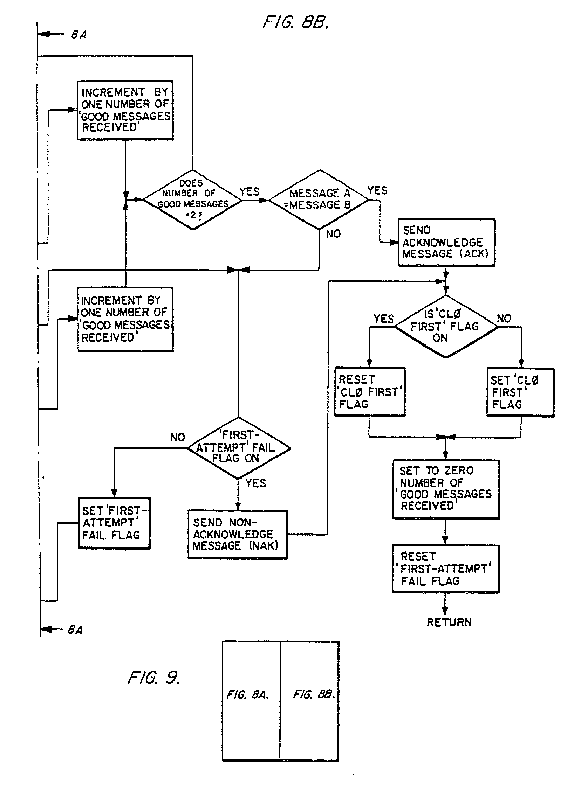

The double message alternate line checking sequence summarized in Fig. 7 may be more fully appreciated by referring to the detailed flow diagram shown in Figs. 8A and 8B (as read in accordance with the flow diagram map of Fig. 9). At the start of the information validity checking procedure, the 'line Ø-first' flag register is checked; if a flag is present, the 'first-attempt fail' flag register is checked, and, if there is no flag in this register, the two data blocks $DB_{A1}$ and $DB_{B1}$ on channel CH1 are stored while the two data blocks $DB_{AØ}$ and $DB_{BØ}$ one channel CHØ are used for the first attempt information check. Thereafter, the header frame of the first data block $DB_{AØ}$ on

channel CHØ undergoes a CRC check, and, if acceptable, the data frame of this data block $DB_{AØ}$ undergoes a CRC check. If the header and data frames CRC checks indicate valid data a 'good message' register is incremented. If the number of good messages is less than two, the error checking procedure returns to the initial part of the flow diagram and, after determining there is no channel CHØ first flag or first-attempt flag present, checks the second following data block $DB_{BØ}$ by repeating the header and data CRC cyclic redundancy checks. If the header and data frames pass the CRC checks, the 'good message' register is incremented again to indicate that a total of two messages in succession (that is, $DB_{AØ}$ and $DB_{BØ}$) have passed the cyclic redundancy check for the header and data frames. Thereafter, the two data blocks $DB_{AØ}$ and $DB_{BØ}$ received on line CHØ are checked by performing a bit-by-bit comparison between the two. If the data blocks $DB_{AØ}$ and $DB_{BØ}$ pass the bit-by-bit comparison test, the communications protocol controller 12 of the destination remote $R_d$ sends an acknowledgement (ACK) message to the source remote $R_s$ to conclude the information block transfer and resets the various registers. If, on the other hand, either the data block $DB_{AØ}$ or $DB_{BØ}$ on line CLØ fail the header and data frame CRC checks or these two data blocks fail the bit-by-bit comparison check, the communication protocol controller 12 sets the 'first-attempt fail' flag and returns to the start of the procedure to determine that the 'line Ø-first' flag and the 'first-attempt' fail flag are present. The communication protocol controller 12 then uses the stored data blocks $DB_{A1}$ and $DB_{B1}$ from line CL1 (which data blocks were previously stored in FIFO 50). The header block and data block of the data blocks $DB_{A1}$ and $DB_{B1}$ from line CL1 undergo the CRC check and, if successful, cause the incrementing of the 'good message' register to cause the communication protocol controller 12 to then check the validity of the second data block $DB_{B1}$. If the data blocks $DB_{A1}$ and $DB_{B1}$ pass the CRC checks, they are compared with one another in a bit-by-bit comparison test and if this comparison check is successful, an acknowledgement (ACK) is sent. If, on the other hand, either data blocks $DB_{A1}$ or $DB_{B1}$ does not pass the CRC check or the data blocks do not pass the bit-by-bit comparison test, a non-acknowledgement (NAK) is sent to the source remote $R_s$ including information requesting the retransmission of the data blocks which failed the validity test at the destination remote $R_d$. The source remote $R_s$ then retransmits the improperly received information blocks as described above with retransmission limited to a finite number. A register is provided for each of the communication links for recording, in a cumulative manner, the number of times an invalid message is received for each communication link. In this manner, it can be determined, on a statistical basis, whether one of the two communiction links has suffered a deterioration in signal transmission capability and, of course, whether one of the communication links is severed.

As can be appreciated, the dual transmission of the identical messages on plural communication links vastly enhances the ability of the destination remote $R_d$ to detect errors and determine whether the information being transmitted is valid or not. In addition, the destination remote $R_d$ is able to operate and successfully receive messages even if one of the communication links CL0 or CL1 is severed since the communication protocol controller 12 at the destination $R_d$ will examine the received signals on each line and will find invalid data on the severed line, but will always examine the data blocks on the other line and, if necessary, request retransmission of the information blocks.

In selecting one of the two channels CH0 or CH1 for the first validity check, it is preferred that one of the two channels (e.g., CH0) be selected for the first check on every other information transaction and that the other of the two channels (e.g., CH1) be selected for the first check for the other intermediate information transactions. While the system has been disclosed as having dual communication links CL0 and CL1, the invention is not so limited and can encompass more than two communication links with the remotes adapted to sequentially examine signals received on the various channels.

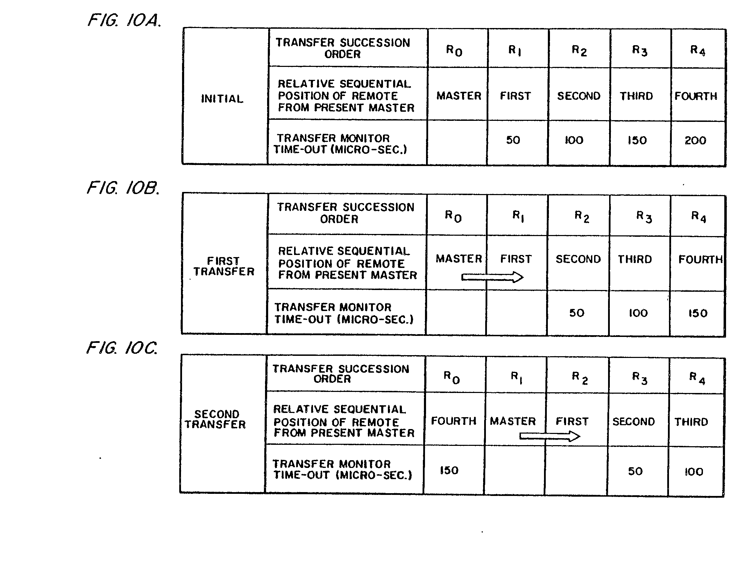

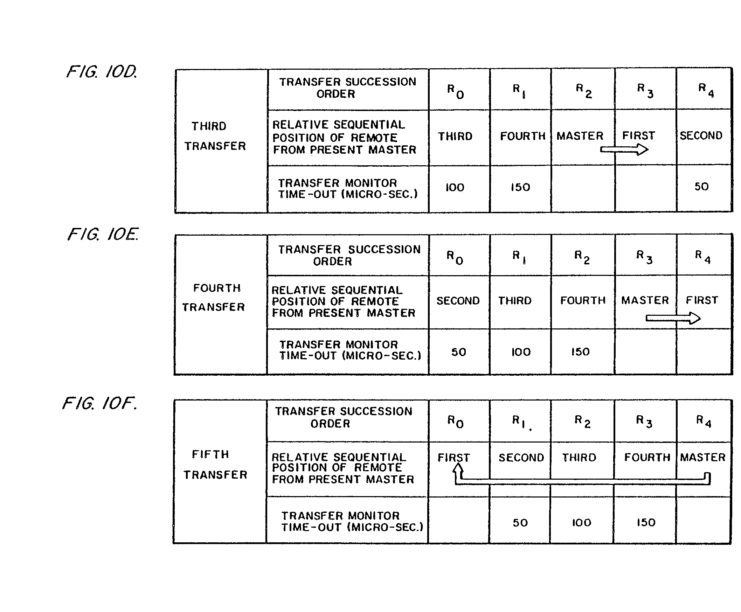

As mentioned above, each remote $R_n$ of the control system is adapted to accept and then relinquish supervisory control of the communication link CL on a master-for-the-moment or revolving master arrangement. The communication protocol controller 12 of each remote $R_n$ includes a register which contains the remote succession number, another register which contains the total number of remotes in the system, and another register which contains the relative position of the remote from the present system master. The first two registers are schematically illustrated by the reference character 60 in Fig. 4. In addition, each remote $R_n$ includes a variable transfer-monitor timer having a time-out interval that is set in accordance with a predetermined control-transfer time constant (50 microseconds in the preferred embodiment) and the position of the particular remote relative to the present system master to permit, as explained in more detail below, the master-for-the-moment transfer to continue even in the event of a disabled remote (that is, a remote that is unable to accept supervisory control because of a malfunction). Another timer is provided to force transfer of supervisory control of the communications link CL in the event a remote, because of a malfunction, is unable to transfer supervisory control to its next successive remote. The operation of the master-for-the-moment transfer technique can be appreciated by consideration of the following example of an illustrative system that includes five remotes arranged in the open loop configuration of Fig. 1 and transferring supervisory control of the communication link CL in accordance with the tables of Figs. 10A—10F. The upper row of each table indicates the succession sequence or order of the five remotes $R_0$, $R_1$, $R_2$, $R_3$ and $R_4$ that comprise the system; the intermediate row identifies the remote that is the present master-for-the-moment and also identifies the relative successive position of the other remotes from the present master, that is, the first (or next) successive remote from the present master, the second successive remote from the present master, the third remote from the present master, etc.; and the third row of each table lists the setting of the variable transfer-monitor timer for the particular remote.

The system is provided with initialization software so that the first remote in the succession, $R_0$, assumes supervisory control of the communication link CL after system start-up and becomes the initial master of the system (Fig. 10A). When the initial master $R_0$ is in control of the communications link CL, it can send data to any of the other remotes, request status or other data from another remote, and send control blocks and the like over the communications link CL. When the master $R_0$ determines that it no longer desires possession of the communications link CL, it passes supervisory control of the communications link CL to the next or first successive remote in accordance with the succession order. Thus, when the present master $R_0$ concludes its information transfer transactions, it transfers supervisory control of the communications link CL to its next or first successive remote $R_1$ by transmitting a control block to the remote $R_1$ with all the remaining remotes (that is, $R_2$, $R_3$, $R_4$) being cognizant of the transfer of supervisory control from the present master $R_0$ to its first or next successive remote $R_1$. Since, in the present system, the transfer of supervisory control of the communications link CL is expected to take place within 50 microseconds, the second successive remote R2, as shown in the third row of the table of Fig. 10B, sets its variable transfer-monitor timer to 50 micro-seconds, the third successive remote $R_3$ sets its variable transfer-monitor timer to 100 micro-seconds, and the fourth successive remote $R_4$ sets its transfer-monitor timer to 150 micro-seconds. When the first successive remote $R_1$ receives the control block from the present master $R_0$, it accepts supervisory control of the communications link CL by responding with an acknowledgement message (ACK). If the control block is misreceived, the first successive remote $R_1$ can respond with a non-acknowledgement (NAK) to request retransmission of the control block transferring supervisory control of the communications link CL. During the time interval that the present master remote $R_0$ is attempting to transfer supervisory control of the communication link CL to its next successive remote $R_1$, the transfer-monitor timers of the remaining remotes are counting down. If, for any reason, the next or first successive remote $R_1$ fails

to take control (e.g., a malfunction of the remote), the transfer-monitor timer of the second successive remote $R_2$ will time-out at 50 micro-seconds and cause the second successive remote $R_2$ to then accept supervisory control of the communication link CL from the present master $R_0$ and thus bypass the apparently malfunctioning first successive remote $R_1$.

Assuming that the initial system master $R_0$ successively transfers supervisory control of the communications link CL to its first successive remote $R_1$, that successive remote $R_1$ then becomes the present master with the remaining remotes changing their position relative to the present master and setting their transfer-monitor timers in accordance with the second and third rows of the table of Fig. 10B. When the present master $R_1$ concludes its information transfer transactions, if any, it attempts to transfer supervisory control to its first or next successive remote $R_2$ by sending an appropriate control block to remote $R_2$ which responds with an acknowledgement signal (ACK) or, in the event of a mistransmission of the control block, a non-acknowledgement signal (NAK) which causes retransmission of the control block. When the control block requesting transfer of supervisory control of the communication link CL is sent from the present master $R_1$ to its next successive remote $R_2$, all the remaining remotes reset their transfer-monitor timers in accordance with their position relative to the present remote as shown in the third row of the table of Fig. 10C. Should the next successive remote $R_2$ be unable to accept supervisory control of the communication link CL from the present master $R_1$, the transfer-monitor timer of the second successive remote $R_3$ will time-out in 50 micro-seconds and cause the second successive remote $R_3$ to assume supervisory control of the communications link CL to thereby bypass an apparently malfunctioning first successive remote $R_2$. As can be appreciated from a review of the transfer-monitor time-out settings of the various remotes, supervisory control of the communications link CL will transfer even if one or more successive remotes are malfunctioning, when the transfer-monitor timer of the next operable remote times out. This transfer sequence continues in succession as shown in the remaining tables of Figs. 10D to 10F with supervisory control of the communication link CL being passed from remote to remote in succession with the last remote $R_4$ returning supervisory control to the first remote $R_0$.

By employing a master-for-the-moment transfer technique in which the receiving remote acknowledges control from the transferring remote and in which retransmission of a misreceived control block is provided for in response to a non-acknowledgement signal from the receiving remote, it is possible to positively transfer supervisory control of the communication link. This technique advantageously transfers control using the data and information carrying communication link rather than, as in other systems, by providing separate communication lines or channels dedicated solely to supervisory control transfer functions. Also, the provision of a variable transfer-monitor timer at each remote that is set in accordance with the remote's relative position to the present master and a transfer time-constant automatically transfers supervisory control of the communications link even if one or more of the successive remotes are malfunctioning.

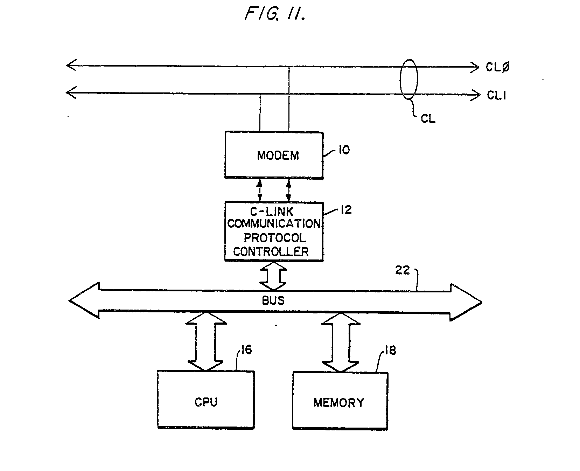

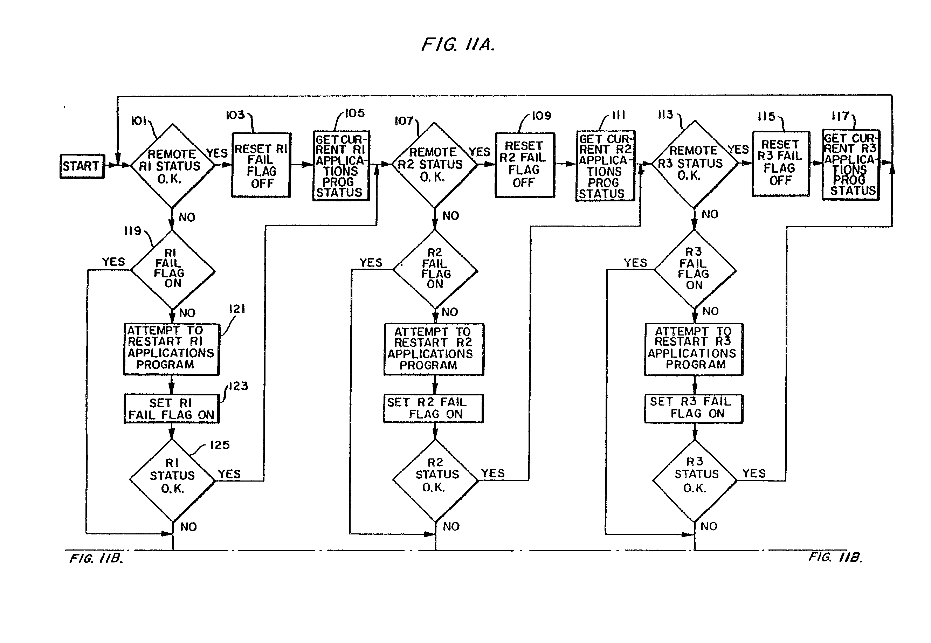

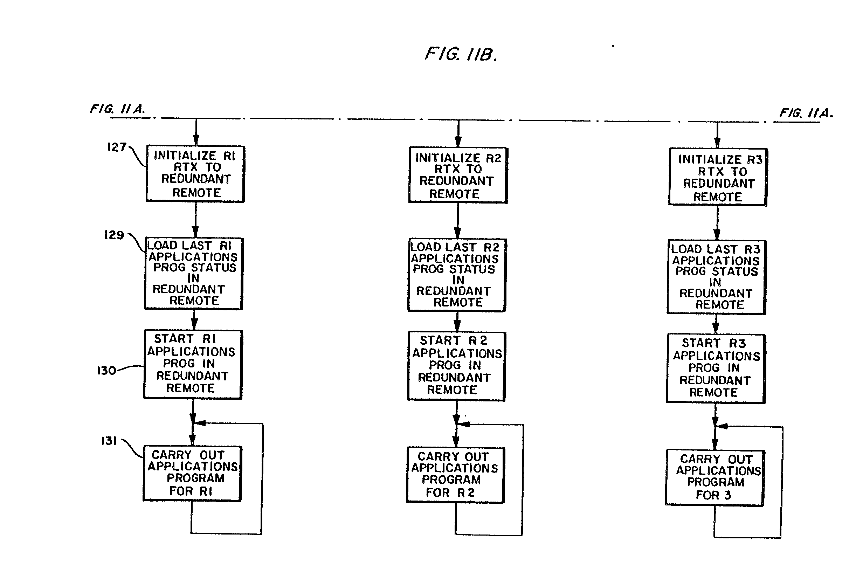

The architecture of a redundant remote ($R_1$ and $R_8$ in Fig. 1), as shown in Fig. 11, is essentially the same as that of a primary remote except that it has no input/output devices assigned to it. Each redundant remote functions to take over control responsibility of a controlled device from a primary remote in the event the primary remote malfunctions.

In each primary remote, preassigned memory locations are designated to act as a 'mailbox' register for that remote. Each time the central processing unit 16 of the primary remote cycles through its applications program, in which it responds to and controls the input/output devices of the remote via the input/output management device 14, it stores a predetermined number in its mailbox. Each time the processor 14A of the input/output management device 14 cycles through its program, it decrements the number stored in the mailbox. The time for the CPU 16 to cycle through its program and for the input/output management device 14 to cycle through its program is approximately 1:1 so that the number stored in the mailbox will be maintained at or near the predetermined value set by the applications program of the CPU 16 unless the CPU 16 ceases to cycle through its applications program. Should this happen, the number stored in the mailbox memory 18 will be decremented by the input/output management device 14 until it reaches a zero value.

Each time a redundant remote which is serving as a back-up for its associated primary remotes takes its turn in the master-for-the-moment sequence described above, the redundant remote will request and obtain the value of the number in the mailbox of its assigned primary remotes. If the number in the mailbox is not zero, the redundant remote will know that the central processing unit 16 in the so-queried primary remote is carrying out its applications program and has not gone into an emergency mode of operation or otherwise ceased to operate. If the redundant remote detects that the number in the mailbox for one of its assigned primary remotes is zero, then the redundant remote will determine that the central processing unit 16 of the zero-mailbox remote is not carrying out the applications program and, in response to this determination, the redundant remote will first attempt to restart the applications program in the central processing unit 16 of the primary remote. If it fails to successfully restart the applications program, the redundant remote will carry out the applications program for the failed remote. In carrying out the applications program, the redundant remote will respond to the input devices and control the output devices assigned to the failed primary remote by sending commands and receiving data from the failed remote over the communications link CL.

The redundant remote, in addition to checking the status of its assigned primary remotes for which the redundant remote serves as a back-up, also must maintain an up-to-date record of the status of the applications program in each of these assigned primary remotes. The redundant remote checks the status of the mailbox and gets the current applications program status from each of the primary remotes by sending requests for information over the communications link CL when the redundant remote takes its turn in the master-for-the-moment sequence as described above.

The operation of the redundant remote in carrying out its function as a back-up for the primary remotes will be more fully understood with reference to Figs. 11A and 11B which illustrate a flow chart of the program in the redundant remote $R_4$ (Fig. 1), which serves as a back-up for its assigned primary remotes $R_1$, $R_2$ and $R_3$. The other redundant remote $R_8$ will have the same program except that it will be applied to its assigned remotes $R_5$, $R_6$, and $R_7$.

As shown in Figs. 11A, after the program in the redundant remote $R_4$ is started, it enters into a decision instruction sequence 101 to check the status of remote $R_1$. As explained above, it does this by sending a request for information over the communications link CL to remote $R_1$ asking for the current number in the mailbox of remote $R_1$. It then determines whether this number is greater than zero. If the number is greater than zero, the status of remote $R_1$ is determined to be operating and the program of the redundant remote $R_4$ advances to instruction step 103 in which it resets a fail flag for $R_1$ to 'off' and then enters subroutine 105, in which the current applications program status in remote $R_1$ is obtained. This means that the redundant remote $R_4$ requests and obtains the current status of the input and output devices in remote $R_1$ and the current status of the timers and the counters and the flags being used in the applications program of remote $R_1$. In other words, in subroutine 105, all of the information that would be needed for the redundant remote $R_4$ to take over the applications program is obtained from remote $R_1$. This information is obtained by sending requests for data and receiving data back over the communications link CL.

Following the obtaining of the current applications program status of remote $R_1$, the redundant remote $R_4$ program proceeds to decision instruction sequence 107, in which the status of remote $R_2$ is checked in the same manner that was done with respect to $R_1$. If the status of remote $R_2$ is operating, the program advances to instruction step 109, in which the program sets a fail flag for remote $R_2$ and then proceeds into subroutine 111, in which the status of the applications program for remote $R_2$ is obtained in the same manner as for $R_1$ in sub-routine 105. The program then proceeds into a decision instruction sequence 113 to check the status of remote $R_3$. If the status of remote $R_3$ is operating, then the program resets the fail flag for remote $R_3$ in instruction step 115 and proceeds into subroutine 117 to obtain the applications program status for remote $R_3$ in the same manner as for $R_1$ in subroutine 105. Following subroutine 111, the program returns again to decision instruction sequence 101 to check the status of remote $R_1$ and the process cyclically repeats.

If in decision instruction sequence 101, the program determines that the status $R_1$ is not operating as indicated by the number in the mailbox of the remote $R_1$, being zero, the program then advances to decision instruction sequence 119, in which the program determines if the fail flag for $R_1$ is 'on' or 'off'. If the fail flag is 'off', the program proceeds into instruction sequence 121, in which the program attempts to restart the applications program for remote $R_1$. It does this by sending a command over the communications link CL to remote $R_1$ to direct the communications protocol controller 12 (Fig. 2) to attempt a hardware restart of the applications program. This is carried out by the communications protocol controller 12 pulling a restart wire to ground in the common buss 22. When this restart wire is pulled to ground, it starts the applications program back through its initialization program and sets all of the flags, timers, and counters just as if power had been turned on. Such a restart is called a hardware restart. Alternatively, the redundant remote $R_4$ could effect a software restart in the failed remote. A software restart would merely start the applications program through its initialization program with the timers, counters and flags left in their present status.

After completing instruction sequence 121, the redundant remote $R_4$ program then sets the fail flag for remote $R_1$ to 'on' in instruction step 123 and then proceeds into decision instruction sequence 125 to again check the status of remote $R_1$ by checking the number in the mailbox of remote $R_1$ in the same manner as in decision instruction sequence 101. If the applications program in remote $R_1$ was successfully started in instruction sequence 121, the number in the mailbox will not be zero and the program will determine that the status of remote $R_1$ is operating, whereupon the program will jump to decision instruction sequence 107 to check the status of remote $R_2$ as already described.

If the program determines that the status of remote $R_1$ is not operating in decision instruction sequence 125, then this means that the attempt to restart the applications program in remote $R_1$ in instruction sequence 121 failed and the redundant remote $R_4$ program then proceeds into instruction sequence 127 to initialize the input/output management device 14 (also identified in Fig. 11B

as 'RTX') in remote $R_1$ to receive instructions and data from the redundant remote $R_4$ instead of from the central processing unit 16 in the remote $R_1$ and to send data on the status of the input and output devices to the redundant remote $R_4$.

If the program of the redundant remote $R_4$ determines that the fail flag was 'on' instead of 'off' in decision instruction sequence 119, the redundant remote program would proceed directly into the instruction sequence 127 to initialize the input/output management device 14 of remote $R_1$ to respond to the redundant remote $R_4$.

The purpose of the fail flag which is set to 'on' in instruction step 123 and is reset to 'off' in instruction step 103 is to prevent the redundant remote program from getting hung-up in a condition in which it successfully restarts the remote $R_1$ only to have the remote $R_1$ fail again by the time the program of the redundant remote recycles around to checking the mailbox of the remote $R_1$ again in decision instruction sequence 101. If this should happen, the fail flag for remote $R_1$ will have been set to 'on' in instruction step 123 after the successful restarting of the applications program. Then, the next time that the redundant remote program cycles back to decision instruction sequence 101, and determines that the status of remote $R_1$ is not operating, the fail flag for remote $R_1$ will be 'on'. Accordingly, the program will jump from decision instruction sequence 119 into the instruction sequence 127 to initialize the remote $R_1$ to respond to redundant remote $R_4$. If the next time the redundant remote program recycles back to decision instruction sequence 101 to check the status of $R_1$, it determines that the status of $R_1$ is operating, the program will then reset the fail flag to 'off' in instruction step 103 so that in subsequent cycles, should the program determine that the remote $R_1$ has again failed, the program will again go into the restart instruction sequence 121 instead of immediately jumping to the initialization instruction sequence 127.

After the redundant remote program has completed the initialization instruction sequence 127, it then proceeds to subroutine 129. In this subroutine, the status of the applications program of remote $R_1$ last received by the redundant remote $R_4$, which status is stored in the memory of the redundant remote $R_4$, is loaded into pre-determined registers of the memory of the redundant remote $R_4$ in order to carry out the applications program of remote $R_1$ in the redundant remote $R_4$. After this subroutine is completed, the program proceeds into instruction sequence 130 and then into the subroutine 131 in which it starts and carries out the applications program. The redundant remote $R_4$ carries out the $R_1$ applications program by receiving data from remote $R_1$ as to the status of the input and output devices of the remote $R_1$ and sending instructions to remote $R_1$ to direct operation of the input/output management device 14 of the remote $R_1$. The program in the redundant remote $R_4$ will then continue to cycle through the applications program for the remote $R_1$ until it receives a command from the operator to reset it back into its main cycle of checking the status of the remotes $R_1$, $R_2$, and $R_3$.

Should the redundant remote $R_4$ determine that the status of remote $R_2$ or remote $R_3$ is not operating, it then performs the same program with respect to these remotes as described with respect to remote $R_1$ as is illustrated in Figs. 11A and 11B.

The redundant remote $R_8$ will take over the applications program should any of the primary remotes $R_5$—$R_7$ become nonoperative in the same manner as described above with respect to $R_4$ serving as a back-up for the primary remotes $R_1$—$R_3$.

It will be appreciated that the provision of the redundant remotes in accordance with the invention decreases malfunctioning of the control system due to one of the primary remotes becoming inoperative as a result of failure of the central processing unit 16 of the primary remote. Because each redundant remote serves as a back-up for several primary remotes, the cost of providing the redundancy is significantly reduced. Because the redundant remotes are themselves each a remote control unit which takes its turn in the master-for-a-moment sequence communicating with the other remotes over the dual channel communications link, the redundant remotes can be provided in the system very inexpensively.

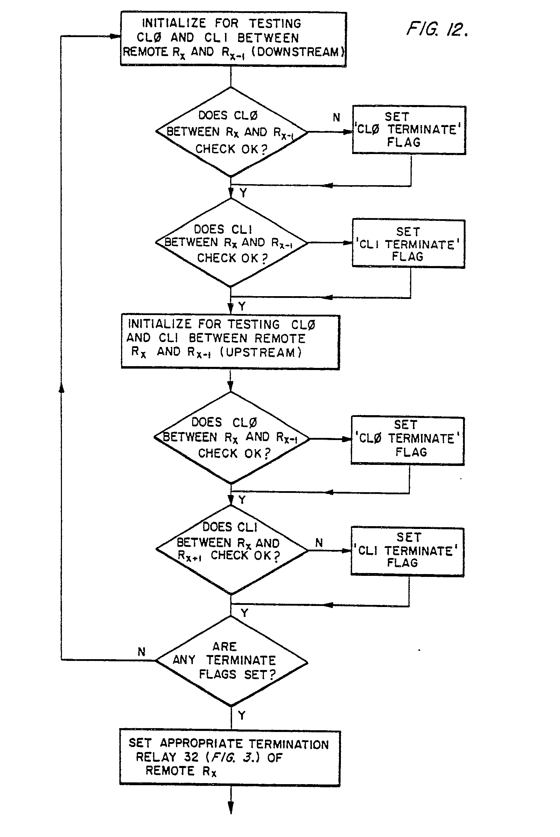

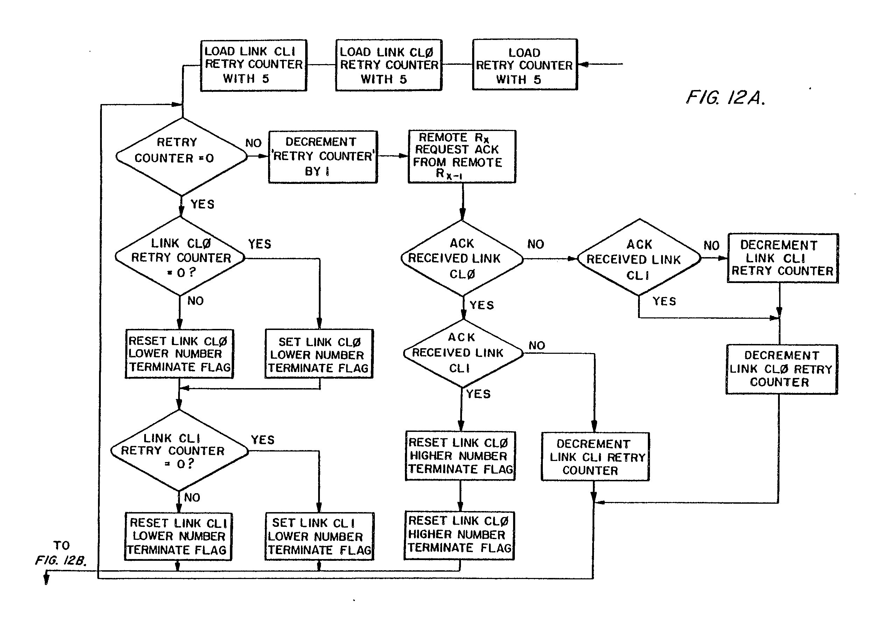

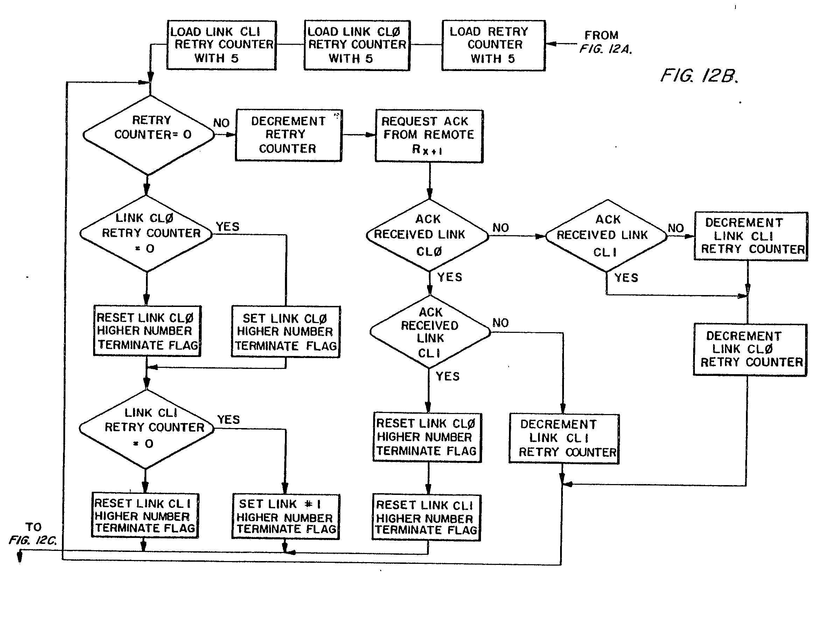

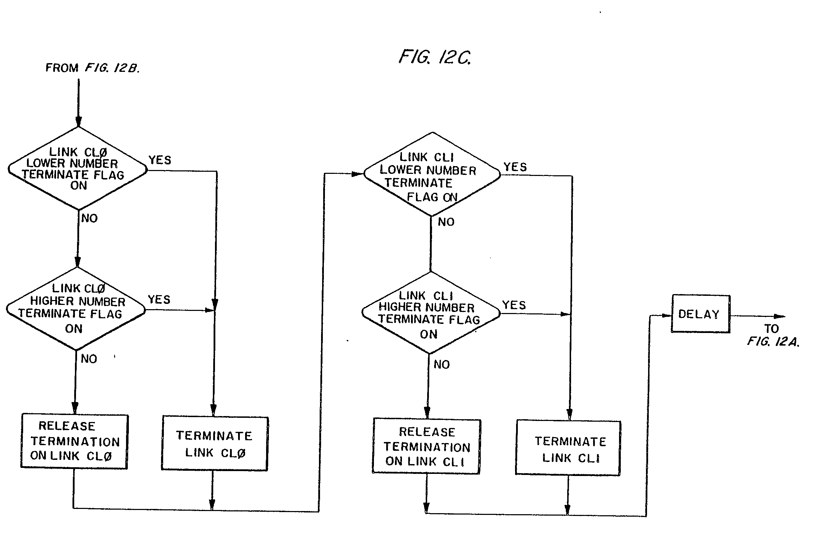

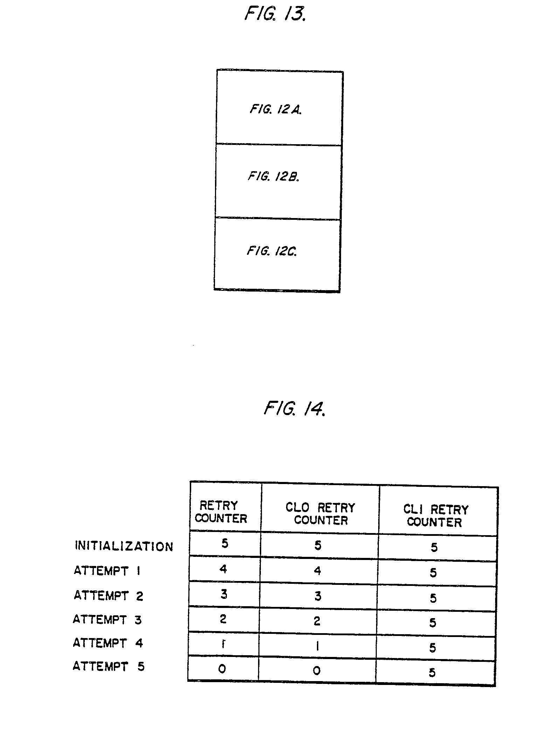

Each remote $R_n$, as described above, is provided with termination impedances Z0 and Z1 for the first and second communication channels CH0 and CH1 (Fig. 3) and a line termination relay $32_0$ and $32_1$ under the control of the communications link control device 38. The termination impedances are connected across each channel of the communications link when the particular remote is the first or the last remote in the system (e.g., $R_1$ and $R_8$ in Fig. 1) to establish proper line termination impedance to prevent signal level degradation and the presence of reflected signals, both conditions which can adversely affect the performance of the system. The termination impedances Z0 and Z1 are also applied across the appropriate communications channels when a remote determines, as described below, that the communications link CL between it and its immediately adjacent higher or lower number remote is severed or sufficiently degraded that reliable data transmission cannot be maintained therebetween. The determination as to communications link degradation can be made by providing each remote with a register for each communications channel that records, in a cumulative manner, the number of invalid messages received from the immediately adjacent remote(s) and terminate one or both of the communications link CL0 and CL1 in the direction of the remote from which the number of invalid messages received exceeds a threshold value. More preferably, however, each remote is provided with an active testing diagnostic routine to enable it to test the communication integrity of the communications link between it and its immediately adjacent remote(s) in accordance with the flow diagrams illustrated in Figs. 12, 12A, 13B and 12C as read in accordance with Fig. 13 and the table of Fig. 14.

The flow diagram illustrated in Fig. 12 is a summary of the manner by which each remote is capable of testing the communication integrity of the communications link CL between it and its immediate adjacent remote or remotes and terminating one or both of the communications links, CLØ and CL1, when a degraded or interrupted line condition is detected. As shown in Fig. 12, the remote $R_x$ is initialized and then, in sequence, tests the communications integrity of the communications link CLØ in the downstream direction between it and its immediately adjacent lower number remote (that is, $R_{x-1}$) and then tests the communication integrity of the communications link CL1 in the downstream direction with the same remote. If either the communications link CLØ or CL1 in the downstream direction is faulty, an appropriate flag is set in a register in the remote $R_x$ reserved for this purpose. In a similar manner, the remote $R_x$ then tests the communications integrity of the communications link CLØ and CL1 in the upstream direction with its immediately adjacent higher number remote (that is, remote $R_{x+1}$) and sets the appropriate flag, as and if required. After this initial diagnostic checking takes place, the remote $R_x$ will terminate the failed communications line CLØ and/or CL1 by actuating the appropriate relay contacts $32_0$ and/or $32_1$ as required. The line checking test utilized in Fig. 12 preferably takes place when the remote $R_x$ is master-for-the-moment (that is, $R_m$).

A more detailed explanation of the communications line integrity check and automatic line termination may be had by referring to Figs. 12A, 12B and 12C (as read in accordance with the flow chart legend of Fig. 13) in which Fig. 12A represents the downstream integrity check with the next lower number remote, Fig. 12B represents the upstream integrity check with the next higher number remote, and Fig. 12C represents the line termination function in response to the results of the integrity test performed in Figs. 12A and 12B.

In Fig. 12A, the line checking diagnostic is started by first loading three registers or counters, namely, a 'retry counter', a 'CLØ retry counter', and a 'CL1 retry counter' with an arbitrarily selected number, for example, five. The 'retry counter' is then decremented by one and a message sent from the remote $R_x$ to the remote $R_{x-1}$ requesting an acknowledgement ACK signal. If the communications link CLØ and CL1 between the interrogating remote and the responding remote is fully functional, a valid ACK signal will be received by the interrogating remote $R_x$ on both CLØ and CL1. The diagnostic checking will then route to the part of the program (Fig. 12B) for checking the communications integrity of the communications link CLØ and CL1 between the interrogating remote $R_x$ and the next higher number remote in the system, that is, $R_{x+1}$. On the other hand, if a valid ACK signal is not received on one or both of the communications links CLØ or CL1 by the requesting remote $R_x$ from the immediately adjacent lower number responding remote $R_{x-1}$, the appropriate retry counter (that is, 'CLØ retry counter' or 'CL1 retry counter') will be decremented by one and the procedure repeated until the 'retry counter' is zero at which time the appropriate CLØ and/or CL1 terminate flag register will be set; thereafter, the program will route to the upstream communications integrity check shown in Fig. 12B.

The flow diagram of Fig. 12B is basically the same as that of Fig. 12A except that the communications integrity check occurs for that portion of the communications link CL between the interrogating remote $R_x$ and the next higher number responding remote $R_{x-1}$. More specifically, the three registers or counters, that is, the 'retry counter', the 'CLØ retry counter', and the 'CL1 retry counter' are loaded with the arbitrarily selected value of five. The 'retry counter' is then decremented by one and a message sent from the interrogating remote $R_x$ to the remote $R_{x-1}$ requesting an acknowledgement signal. If the communications link CLØ and CL1 between the interrogating remote $R_x$ and the responding remote $R_{x-1}$ is integral, a valid acknowledgement signal will be received by the interrogating remote $R_x$ and the program will route to the termination impedance portion of the procedure shown in Fig. 12C. On the other hand, if a valid acknowledgement signal is not received on one or both of the communications lines CLØ or CL1 by the interrogating remote $R_x$ from the higher order responding remote $R_{x+1}$, the appropriate retry counter, that is, the 'CLØ or CL1 retry counter' will be decremented by one and the procedure repeated until the 'retry counter' is zero at which point the appropriate CLØ and/or CL1 termination flag register will be set; thereafter, the program diagnostic will route to the line impedance termination portion shown in Fig. 12C.

In the flow diagram of Fig. 12C, the various termination registers are examined for set flags and appropriate commands issued to the C-link control device 38 (Fig. 3) to terminate the line by appropriate actuation of the relay contacts $32_0$ and/or $32_1$. As is also shown in Fig. 12C, a line termination relay can also be released (that is, reset) to remove a previously applied line termination impedance. Accordingly, the system provides each remote with the ability to remove a line termination as well as apply a line termination. This particular feature is desirable when a communication link is temporarily degraded by the presence of non-recurring electrical noise to permit the system to automatically reconfigure its line impedances.

The following specific example illustrates the operation of the line termination procedure in which it is assumed that the communications link CLØ in Fig. 1 is severed at point A as shown therein and that the remote $R_4$ is the present master $(R_m)$ of the system and testing the communications integrity of the communications link between itself as the interrogating remote $(R_x)$ and its next lower order number remote $R_3$ (that is, $R_{x-1}$). In accordance with the flow diagram of Fig. 12A, the 'retry counter', and the 'CLØ retry counter', and the 'CL1 retry counter', as shown in the tabulation table of Fig. 14, are set to the predetermined value of five. The 'retry counter' is decremented by one and the requesting interrogating remote $R_4$ $(R_x)$ requests an acknowledgement from the responding remote $R_3$ (that is, $R_{x-1}$). The requested acknowledgement will be provided on line CL1 but not line CLØ because of the aforementioned interruption at point A (Fig. 1). The interrogating remote $R_4$, not receiving the requested acknowledgement signal on communications link CLØ, will decrement the 'CLØ retry counter' by one. Thereafter, the retest procedure will be sequentially continued with the 'CLØ retry counter' being decremented with each additional unsuccessful attempt to obtain an acknowledgement from remote $R_3$ through the communications link CLØ. When the 'retry counter' decrements to zero, the 'CLØ retry counter' will also be decremented to zero at which time the CLØ lower order termination flag will be set. The remote $R_4$ will thereafter continue the diagnostic checking procedure to test the communications integrity of that portion of the communications link between the remote $R_4$ $(R_x)$ and the next adjacent higher remote $R_5$ (that is, $R_{x-1}$) in accordance with the flow diagram of Fig. 12B. At the conclusion of the test of the communications link between the interrogating remote $R_4$ and the immediately adjacent lower number and higher number remotes $R_3$ and $R_5$, the termination relay contacts $32_0$ (Fig. 3) will be set to terminate the communications link CLØ at the remote $R_4$. In a similar manner, the remote $R_3$, when it becomes master-for-the-moment, will also apply a termination impedance across the communications link CLØ.

As can be appreciated from the foregoing, the remotes $R_0 \ldots R_n$ have the ability, even when one or both of the communication links CLØ and CL1 are severed to still function on a master-for-the-moment basis and also to effect appropriate line termination to minimize the adverse effect on digital data signal strength and the generation of reflected signals from mismatched line impedance caused by deteriorated or severed communication lines. In addition, the system is self-healing, that is, when reliable communications is restored over the severed or degraded portion of the communications link the remotes $R_n$ will then again function to remove the line impedances to resume full system operation.

**Claims**

1. A method of operating a control system for controlling an industrial process, which system is of the type having a plurality of remote units, each connected to an associated input/output device and each interconnected to other remote units through a common communications link, in which each remote unit is assigned a unique position in a predetermined succession order, 0, 1, 2, 3, . . . m, . . . n, and in which each remote unit accepts supervisory control of the communications link on a master for a moment basis, said system operating such that supervisory control of the communications link is sequentially transferred from the present master $R_m$ to successive remote units $R_m+n$ in the succession order by transmitting a control transfer command signal through the communications link from the present system master to the next successive remote unit $R_m+1$, in response to which the control of the communications link is accepted by the first successive remote unit $R_m+1$ from the present system master, characterised in that the system is further operated by setting a transfer monitor timer in at least the second and third successive remote units $R_m+2$ and $R_m+3$ to a respective time out interval based on a function of the position of the second and third successive remote units relative to the present system master $R_m$ each time the master is to accept supervisory control over said communications link, and accepting supervisory control by a successive remote unit if and when the transfer monitor timer of the successive remote unit times out before the first successive remote unit $R_m+1$ accepts supervisory control of the communications link.

2. A method according to Claim 1 wherein a transfer variable timer is set in all of the successive remote units to a time-out interval based on a function of the position of the successive remote units relative to the present system master $R_m$ each time a new master is to accept a supervisory control.

3. A system according to Claim 1 or Claim 2 wherein the validity of the control transfer command signal is evaluated at the next successive remote unit $R_m+1$ and an acknowledgement signal is sent through the communications link from the next successive remote unit $R_m+1$ to the present system master R when the control transfer command signal is found valid.

4. A system for controlling an industrial process comprising a plurality of process controlling remote units and a communications link interconnecting said remote units, each of said remote units being assigned a unique position in the predetermined succession order, each of said remote units comprising communication means to receive information transmitted via said communications link and being adapted to exercise exclusive supervisory control over said communications link in response to receiving a control transfer block via said communications link containing a predetermined address, said remote units each being operable when exercising supervisory control to transmit information over said communications link and to transmit a control transfer block over said communications link containing an address selected to transfer exclusive supervisory control over said communications link to another one of said remote units in accordance with said predetermined sequence, characterised in that each of said remote units (R1 to R7) is provided with variable time-out means (52, 62) by means of which a variable time-out interval is set each time exclusive supervisory control over said communications link is to be transferred to another one of said remote units in said sequence, said means setting the time-out interval at each transfer of control to be of a duration corresponding to how far removed the corresponding remote unit is from the remote unit to which supervisory control is transferred in said predetermined sequence, said time-out means of each remote unit causing the communication means thereof to exercise supervisory control over said communications link when the time-out interval of such time-out means expires.

## Patentansprüche

1. Verfahren zum Betreiben eines Steuersystems für die Steuerung eines industriellen Prozesses, wobei dieses System von der Art eines Systems ist, das mehrere Ferneinheiten aufweist, von denen jede mit einer zugehörigen Eingangs/-Ausgangs - Einrichtung verbunden ist und über ein gemeinsames Datenübertragungsglied mit anderen Ferneinheiten verbunden ist, wobei jeder Ferneinheit in diesem System eine eindeutige Position in einer vorbestimmten Reihenfolge 0, 1, 2, 3, .... m, .... n zugeordnet ist und jede Ferneinheit eine Überwachungssteuerung des Datenübertragungsgliedes von einer Mastereinheit für eine Momentbasis entgegennimmt, wobei dieses System so arbeitet, daß die Überwachungssteuerung des Datenübertragungsgliedes folgegebunden von der jeweiligen Mastereinheit $R_m$ zu aufeinanderfolgenden Ferneinheiten $R_m+n$ in dieser Reihenfolge übertragen wird, indem ein Steuerübertragungsbefehlssignal von der jeweiligen Systemmastereinheit durch das Datenübertragungsglied zu der nächstfolgenden Ferneinheit $R_m+1$ übertragen wird, woraufhin die Steuerung des Datenübertragungsgliedes von der ersten nachfolgenden Ferneinheit $R_m+1$ von der jeweiligen Systemmastereinheit übernommen wird, dadurch gekennzeichnet, daß das System ferner so betrieben wird, daß ein Übertragungsüberwachungszeitgeber zumindest in den zweiten und dritten nachfolgenden Ferneinheiten $R_m+2$ und $R_m+3$ in Abhängigkeit von einer Funktion der Lage der zweiten und dritten nachfolgenden Ferneinheiten relativ zu der vorliegenden Systemmastereinheit $R_m$ jedesmal, wenn die Mastereinheit die Überwachungssteuerung über das Datenübertragungsglied entgegennehmen soll, auf ein entsprechendes Zeitsperrintervall eingestellt wird und daß die Überwachungssteuerung von einer nachfolgenden Ferneinheit entgegengenommen wird, falls und dann wenn der Übertragungsüberwachungszeitgeber der nachfolgenden Ferneinheit abläuft, bevor die erste nachfolgende Ferneinheit $R_m+1$ die Überwachungssteuerung des Datenübertragungsgliedes entgegennimmt.

2. Verfahren nach Anspruch 1, in dem ein variabler Übertragungszeitgeber in sämtlichen der aufeinanderfolgenden Ferneinheiten in Abhängigkeit von einer Funktion der Lage der aufeinanderfolgenden Ferneinheiten relativ zu der vorliegenden Systemmastereinheit $R_m$ jedesmal, wenn eine neue Mastereinheit eine Überwachungssteuerung entgegennehmen soll, auf ein Zeitsperrintervall eingestellt wird.

3. System nach Anspruch 1 oder nach Anspruch 2, in dem die Gültigkeit des Steuerübertragungsbefehlssignals bei der nächstfolgenden Ferneinheit $R_m+1$ ausgewertet wird und ein Bestätigungssignal über das Datenübertragungsglied von der nächstfolgenden Ferneinheit $R_m+1$ zu der jeweiligen Systemmastereinheit $R_m$ gesandt wird, wenn das Steuerübertragungsbefehlssignal für gültig befunden ist.

4. System zur Steuerung eines industriellen Prozesses, das mehrere prozeßsteuernde Ferneinheiten und ein diese Ferneinheiten miteinander verbindendes Datenübertragungsglied aufweist, wobei jeder der Ferneinheiten eine eindeutige Position in der vorbestimmten Reihenfolge zugeordnet ist, jede der Ferneinheiten eine Kommunikationseinrichtung aufweist, um über das Datenübertragungsglied übertragene Information zu empfangen, und so angepaßt ist, daß sie auf das Datenübertragungsglied eine Exklusivüberwachungssteuerung infolge des Empfangs von einem eine vorbestimmte Adresse enthaltenden Steuerübertragungsblocks über das Datenübertragungsglied ausübt, wobei jede der Ferneinheiten betätigbar ist, wenn sie die Überwachungssteuerung ausübt, um über das Datenübertragungsglied Information zu übertragen und einen Steuerübertragungsblock über das Datenübertragungsglied zu übertragen, der eine Adresse enthält, die so ausgewählt ist, daß über das Datenübertragungsglied eine Exklusivüberwachungssteuerung in Übereinstimmung mit der vorbestimmten Reihenfolge auf eine andere dieser Ferneinheiten übertragen wird, dadurch gekennzeichnet, daß jede der Ferneinheiten (R1 bis R7) variable Zeitsperreinrichtungen (52, 62) aufweist, mittels derer ein variables Zeitsperrintervall jedesmal eingestellt wird, wenn die Exklusivüberwachungssteuerung über das Datenübertragungsglied auf eine andere dieser Ferneinheiten in dieser Reihenfolge zu übertragen ist, wobei diese Einrichtungen bei jeder Steuerübertragung diese Zeitsperrintervall so festsetzen, daß es eine Zeitdauer entsprechend einer Entfernung aufweist, um die die entsprechende Ferneinheit von der Ferneinheit, zu der die Überwachungssteuerung in der vorbestimmten Reihenfolge übertragen wird, entfernt ist, wobei diese Zeitsperreinrichtungen jeder Ferneinheit deren Kommunikationseinrichtung veranlassen, auf das Datenübertragungsglied eine Überwachungssteuerung auszuüben, wenn das Zeitsperrintervall derartiger Zeitsperreinrichtungen abläuft.

## Revendications

1. Procédé d'exploitation d'un système de commande pour la commande d'un processus industriel, lequel système est du type comportant une pluralité d'unités à distance, raccordées chacune à un dispositif d'entrée/sortie associé et interconnectées chacune à d'autres unités à distance par l'intermédiaire d'une liaison commune de communications, et selon lequel à chaque unité à distance se trouve affectée une position unique selon un ordre de succession prédéterminé 0, 1, 2, 3, ..., m, ... n, et selon lequel chaque unité à distance prend en charge la commande de surveillance de la liaison de communications, en devenant temporairement le pilote, ledit système fonctionnant de telle sorte que la commande de surveillance de la liaison de communications est transférée successivement depuis le pilote actuel $R_m$ à des unités à distance successives $R_m+n$ dans l'ordre de succession par transmission d'un signal d'instruction de transfert de commande par l'intermédiaire de la liaison de communications depuis le pilote actuel du système à l'unité à distance immédiatement suivante $R_m+1$, en réponse à quoi la commande de la liaison de communications est transférée du pilote actuel du système à la première unité à distance successive $R_m+1$, caractérisé en ce que le système est en outre mis en oeuvre grâce au réglage d'un minuterie de contrôle de transfert située dans au moins la seconde et la troisième unités à distance successives $R_m+2$ et $R_m+3$ sur un intervalle de temporisation respectif sur la base d'une fonction de la position des seconde et troisième unités à distance successives par rapport au pilote actuel $R_m$ du système, chaque fois que le pilote doit prendre en charge la commande de surveillance par l'intermédiaire de ladite liaison de communications, et par prise en charge de la commande de surveillance par une unité à distance suivante si et lorsque la minuterie de contrôle de transfert de l'unité à distance suivante s'arrête avant que la première unité à distance suivante $R_m+1$ prenne en charge la commande de surveillance de la liaison de communications.

2. Procédé selon la revendication 1, selon lequel une minuterie variable de transfert est réglée, dans toutes les unités à distance suivante, sur un intervalle de temporisation basé sur une fonction de la position des unités à distance suivante par rapport au pilote actuel $R_m$ du système, chaque fois qu'un nouveau pilote doit prendre en charge une commande de surveillance.

3. Système selon la revendication 1 ou 2, dans lequel la validité du signal d'instruction de transfert de commande est évaluée dans l'unité à distance suivante $R_m+1$ et un signal d'accusé de réception est envoyé par l'intermédiaire de la liaison de communications depuis l'unité à distance immédiatement suivante $R_m+1$ au pilote actuel R du système, lorsque le signal d'instruction de transfert de commande s'avère être valable.

4. Système pour commander un processus industriel, comprenant une pluralité d'unités à distance de commande de processur et une liaison de communications interconnectant lesdites unités à distance, chacune desdites unités à distance se voyant affecter une position unique dans l'ordre prédéterminé de succession, chacune desdites unités à distance comprenant des moyens de communication pour recevoir une information transmise par l'intermédiaire de ladite liaison de communications et étant adaptée pour réaliser une commande de surveillance exclusive de ladite liaison de communication en réponse à la réception d'un bloc de transfert de commande contenant une adresse prédéterminée, par l'intermédiaire de ladite liaison de communications, lesdites unités à distance pouvant être activées chacune lors de l'exécution de la commande de surveillance pour transmettre une information par l'intermédiaire de ladite liaison de communications et pour transmettre, par l'intermédiaire de ladite liaison de communications, un bloc de transfert de commande contenant une adresse sélectionnée pour transférer la commande de surveillance exclusive par l'intermédiaire de ladite liaison de communications à une autre desdites unités à distance conformément à ladite séquence prédéterminée, caractérisé en ce que chacune desdites unités à distance (R1 à R7) comporte des moyens de temporisation variable (52, 62), à l'aide desquels un intervalle de temporisation variable est réglé chaque fois qu'une commande de surveillance exclusive par l'intermédiaire de ladite liaison de communications doit être transfrée à une autre desdites unités à distance lors de ladite séquence, lesdits moyens réglant l'intervalle de temporisation lors de chaque transfert de la commande, pour qu'il soit d'une durée correspondant à la distance dont est éloignée l'unité à distance correspondante par rapport à l'unité à distance à laquelle la commande de surveillance est transférée pendant ladite séquence prédéterminée, lesdits moyens de temporisation de chaque unité à distance déclenchant les moyens de communication de cette unité pour réaliser la commande de surveillance par l'intermédiaire de ladite liaison de communications lors de l'achèvement de l'intervalle de temporisation de tels moyens de temporisation.

## FIG. 1.

FIG. 2.

*FIG. 3.*

FIG. 4.

FIG. 4A.

FIG. 4B.

```
INITIALIZE RTX,
MOVE I/O IMAGE
TO LOCAL AND
SYSTEM RAM
        │
        ▼
GET FIRST CARD
ADDRESS TO BE
SCANNED AND
SCAN
        │
        ▼
  DOES
  SCANNED              NO
  CARD IMAGE =  ───────────►  MOVE LATEST CARD
  PREVIOUS IMAGE            IMAGE, CHANGE IMAGE,
  IN RAM 14E               AND TIME TAG TO
  ?                         MEMORY 18
        │ YES                      │
        ▼                          ▼
GET NEXT CARD              MOVE LATEST CARD
ADDRESS TO BE             IMAGE TO RAM
SCANNED AND              14E
SCAN
        │
        ▼
  IS
  CURRENT
  CARD NUMBER >
  LAST CARD TO
  BE SCANNED
  ?
   NO │  YES
```

6

FIG. 5.

FIG. 5A.

FIG. 5B.

FIG. 5C.

FIG. 5D.

FIG. 6.

## FIG. 7.

START

CL∅ CRC CHECK OF HEADER FRAME GOOD ?  — Y → CL∅ CRC CHECK OF DATA FRAME GOOD ? — Y → CL∅ BIT-FOR-BIT CHECK GOOD ? — Y → SEND ACKNOWLEDGE SIGNAL (ACK) TO SOURCE REMOTE

N

CLI CRC CHECK OF HEADER FRAME GOOD ? — Y → CLI CRC CHECK OF DATA FRAME GOOD ? — Y → CLI BIT-FOR-BIT CHECK GOOD ? — Y → SEND ACKNOWLEDGE SIGNAL (ACK) TO SOURCE REMOTE

N

SEND NON-ACKNOWLEDGE SIGNAL (NAK) TO SOURCE REMOTE

0 033 228

## FIG. 8A.

8B →

- PLACE DB$_{AI}$ & DB$_{BI}$ FROM CLI IN STORAGE
- USE DB$_{A\emptyset}$ & DB$_{B\emptyset}$ FROM CL$\emptyset$ FOR FIRST ATTEMPT

NO

IS 'FIRST- ATTEMPT' FAIL FLAG ON?  —YES→  RETRIEVE DB$_{AI}$ & DB$_{BI}$ FROM STORAGE

YES

START

IS 'CL$\emptyset$- FIRST' FLAG ON?

NO

IS 'FIRST- ATTEMPT' FAIL FLAG ON?  —YES→  RETRIEVE DB$_{A\emptyset}$ & DB$_{B\emptyset}$ FROM STORAGE

NO

- PLACE DB$_{A\emptyset}$ & DB$_{B\emptyset}$ FROM CL$\emptyset$ IN STORAGE
- USE DB$_{AI}$ & DB$_{BI}$ FROM CL$\emptyset$ FOR FIRST ATTEMPT

IS HEADER FRAME CRC GOOD? (CL$\emptyset$)

IS DATA FRAME CRC GOOD? (CL$\emptyset$)

YES    YES

NO    NO

NO    NO

YES    YES

IS DATA FRAME CRC GOOD? (CLI)

IS HEADER FRAME CRC GOOD? (CLI)

8B →

9

0 033 228

FIG. 8B.

FIG. 9.

10

**FIG. 10A.**

INITIAL

| | $R_0$ | $R_1$ | $R_2$ | $R_3$ | $R_4$ |
|---|---|---|---|---|---|
| TRANSFER SUCCESSION ORDER | | | | | |
| RELATIVE SEQUENTIAL POSITION OF REMOTE FROM PRESENT MASTER | MASTER | FIRST | SECOND | THIRD | FOURTH |
| TRANSFER MONITOR TIME-OUT (MICRO-SEC.) | | 50 | 100 | 150 | 200 |

**FIG. 10B.**

FIRST TRANSFER

| | $R_0$ | $R_1$ | $R_2$ | $R_3$ | $R_4$ |
|---|---|---|---|---|---|
| TRANSFER SUCCESSION ORDER | | | | | |
| RELATIVE SEQUENTIAL POSITION OF REMOTE FROM PRESENT MASTER | MASTER | FIRST ⇧ | SECOND | THIRD | FOURTH |
| TRANSFER MONITOR TIME-OUT (MICRO-SEC.) | | | 50 | 100 | 150 |

**FIG. 10C.**

SECOND TRANSFER

| | $R_0$ | $R_1$ | $R_2$ | $R_3$ | $R_4$ |
|---|---|---|---|---|---|
| TRANSFER SUCCESSION ORDER | | | | | |
| RELATIVE SEQUENTIAL POSITION OF REMOTE FROM PRESENT MASTER | FOURTH | MASTER | FIRST ⇧ | SECOND | THIRD |
| TRANSFER MONITOR TIME-OUT (MICRO-SEC.) | 150 | | | 50 | 100 |

FIG. IOD.

| THIRD TRANSFER | TRANSFER SUCCESSION ORDER | $R_0$ | $R_1$ | $R_2$ | $R_3$ | $R_4$ |
|---|---|---|---|---|---|---|
| | RELATIVE SEQUENTIAL POSITION OF REMOTE FROM PRESENT MASTER | THIRD | FOURTH | MASTER | FIRST $\Rightarrow$ | SECOND |
| | TRANSFER MONITOR TIME-OUT (MICRO-SEC.) | 100 | 150 | | | 50 |

FIG. IOE.

| FOURTH TRANSFER | TRANSFER SUCCESSION ORDER | $R_0$ | $R_1$ | $R_2$ | $R_3$ | $R_4$ |
|---|---|---|---|---|---|---|
| | RELATIVE SEQUENTIAL POSITION OF REMOTE FROM PRESENT MASTER | SECOND | THIRD | FOURTH | MASTER | FIRST $\Rightarrow$ |
| | TRANSFER MONITOR TIME-OUT (MICRO-SEC.) | 50 | 100 | 150 | | |

FIG. IOF.

| FIFTH TRANSFER | TRANSFER SUCCESSION ORDER | $R_0$ | $R_1$ | $R_2$ | $R_3$ | $R_4$ |
|---|---|---|---|---|---|---|
| | RELATIVE SEQUENTIAL POSITION OF REMOTE FROM PRESENT MASTER | FIRST | SECOND | THIRD | FOURTH | MASTER |
| | TRANSFER MONITOR TIME-OUT (MICRO-SEC.) | | 50 | 100 | 150 | |

*FIG. II.*

FIG. IIB.                                                                                                                    FIG. IIB.

0 033 228

FIG. IIB.

FIG. IIA.

FIG. IIA.

FIG. IIA.

INITIALIZE R1 RTX TO REDUNDANT REMOTE

LOAD LAST R1 APPLICATIONS PROG STATUS IN REDUNDANT REMOTE

START R1 APPLICATIONS PROG IN REDUNDANT REMOTE

CARRY OUT APPLICATIONS PROGRAM FOR R1

127

129

130

131

INITIALIZE R2 RTX TO REDUNDANT REMOTE

LOAD LAST R2 APPLICATIONS PROG STATUS IN REDUNDANT REMOTE

START R2 APPLICATIONS PROG IN REDUNDANT REMOTE

CARRY OUT APPLICATIONS PROGRAM FOR R2

INITIALIZE R3 RTX TO REDUNDANT REMOTE

LOAD LAST R3 APPLICATIONS PROG STATUS IN REDUNDANT REMOTE

START R3 APPLICATIONS PROG IN REDUNDANT REMOTE

CARRY OUT APPLICATIONS PROGRAM FOR 3

15

FIG. 12.

FIG. 12A.

To FIG. 12B.

LOAD LINK CLI RETRY COUNTER WITH 5

LOAD LINK CLØ RETRY COUNTER WITH 5

LOAD RETRY COUNTER WITH 5

FROM FIG. 12A.

FIG. 12B.

RETRY COUNTER= O

NO → DECREMENT RETRY COUNTER

REQUEST ACK FROM REMOTE $R_{x+1}$

LINK CLØ RETRY COUNTER = O

YES

ACK RECEIVED LINK CLØ

NO → ACK RECEIVED LINK CLI

NO → DECREMENT LINK CLI RETRY COUNTER

YES

YES

RESET LINK CLØ HIGHER NUMBER TERMINATE FLAG

SET LINK CLØ HIGHER NUMBER TERMINATE FLAG

ACK RECEIVED LINK CLI

NO

DECREMENT LINK CLØ RETRY COUNTER

YES

LINK CLI RETRY COUNTER = O

YES

RESET LINK CLØ HIGHER NUMBER TERMINATE FLAG

DECREMENT LINK CLI RETRY COUNTER

TO FIG. 12C.

RESET LINK CLI HIGHER NUMBER TERMINATE FLAG

SET LINK #I HIGHER NUMBER TERMINATE FLAG

RESET LINK CLI HIGHER NUMBER TERMINATE FLAG

FIG. 12C.

FROM *FIG. 12B.*

LINK CLØ LOWER NUMBER TERMINATE FLAG ON — YES

NO

LINK CLØ HIGHER NUMBER TERMINATE FLAG ON — YES

NO

RELEASE TERMINATION ON LINK CLØ

TERMINATE LINK CLØ

LINK CLI LOWER NUMBER TERMINATE FLAG ON — YES

NO

LINK CLI HIGHER NUMBER TERMINATE FLAG ON — YES

NO

RELEASE TERMINATION ON LINK CLI

TERMINATE LINK CLI

DELAY

TO *FIG. 12A.*

19

0 033 228

## FIG. 13.

| |
|---|
| FIG. 12 A. |
| FIG. 12 B. |
| FIG. 12C. |

## FIG. 14.

| | RETRY COUNTER | CLO RETRY COUNTER | CLI RETRY COUNTER |
|---|---|---|---|
| INITIALIZATION | 5 | 5 | 5 |
| ATTEMPT 1 | 4 | 4 | 5 |
| ATTEMPT 2 | 3 | 3 | 5 |
| ATTEMPT 3 | 2 | 2 | 5 |
| ATTEMPT 4 | 1 | 1 | 5 |
| ATTEMPT 5 | 0 | 0 | 5 |